# EUROPÄISCHE PATENTSCHRIFT

(11) **EP 2 848 171 B1**
(45) Veröffentlichungstag und Bekanntmachung des Hinweises auf die Patenterteilung: **26.06.2019**
(21) Anmeldenummer: 14180757.8
(22) Anmeldetag: 13.08.2014
(51) Int. Cl.: A47J 43/07

(54) **Komponente und Werkzeug eines Küchengeräts**
Component and tool for a kitchen appliance
Composante et outil d'un appareil de cuisine

(30) Priorität: 04.09.2013 DE 102013217688
(43) Veröffentlichungstag der Anmeldung: 18.03.2015
(73) Patentinhaber: BSH Hausgeräte GmbH, 81739 München (DE)
(72) Erfinder: Brecko, Ales, 3000 Celje (SI); Cater, Matej, 3301 Petrovce (SI); Kovacec, Bostjan, 1420 Trbovlje (SI)

(56) Entgegenhaltungen:
- EP-A1- 1 772 087
- EP-A1- 1 900 315
- EP-A2- 0 221 392
- FR-A1- 2 450 092
- US-B1- 6 302 614

## Beschreibung

### Hintergrund der Erfindung

Die Erfindung betrifft eine Komponente eines Küchengeräts mit einer Kupplung zum Befestigen eines Werkzeugs, wobei die Kupplung ein Gewinde aufweist. Die Erfindung betrifft ferner ein Werkzeug zum Befestigen an einer Kupplung einer Komponente eines Küchengeräts, wobei das Werkzeug ein Gewinde aufweist. Zudem umfasst die Erfindung ein Küchengerät mit einer solchen Komponente und ein Kit aus der Komponente und dem Werkzeug.

### Stand der Technik

Komponenten von Küchengeräten mit Kupplungen zum Befestigen eines Werkzeugs sind aus dem Stand der Technik bekannt. Die Patentschrift DE 60 2006 000 858 T2 beschreibt einen Haushaltsmixer vom tauchenden Typ und bezieht sich insbesondere auf einen Mixstab mit einer Schutzglocke, die ein abnehmbares drehbares Werkzeug einschließt. Das Werkzeug ist dazu bestimmt, durch einen von einem Gehäuse getragenen Motor angetrieben zu werden. Eine Welle des Mixstabs ist über ein Lager, das von einem unteren Ende eines rohrförmigen Schafts getragen ist, geführt. Ein Mixwerkzeug weist eine hohle Nabe auf, in welche ein am unteren Ende der Welle geschraubter Mitnehmer eingreift. Dabei weist der Mitnehmer wendelförmige Rippen auf, die mit Rillen zusammenwirken, die in der Nabe ausgebildet sind, um das Werkzeug in Drehung anzutreiben.

Die europäische Patentanmeldung EP 0 607 507 A1 offenbart ein Handrührgerät mit einem mit einer Handhabe versehenen Gehäuse, das wenigstens eine Arbeitswelle aufweist, die mit einem in dem Gehäuse untergebrachten Elektromotor in Antriebsverbindung steht. Das freie Ende der Arbeitswelle ist zur Erleichterung des Aufsteckens eines Werkzeuges mit einer ringsum laufenden profilierten Vertiefung versehen, die bei aufgestecktem Werkzeug innerhalb einer Aufstecknabe des Werkzeugs liegt und die auf der Motorseite durch die zylindrische Arbeitswelle oder einen zylindrischen Abschnitt derselben und auf der anderen Seite durch einen konvexen balligen Wellenabschnitt begrenzt ist, der sich bis zur Stirnseite des Wellenendes erstreckt. Der ballige Wellenabschnitt ist im Wesentlichen in Form eines Kugelabschnittes ausgebildet. Das Profil der Vertiefung ist im Längsschnitt im Wesentlichen kreisförmig gekrümmt mit einem außerhalb der Arbeitswelle liegenden Krümmungsmittelpunkt, wobei der Radius des Kugelabschnittes kleiner ist als der Verkrümmungsradius der Vertiefung. Durch die Ausbildung des Wellenendes kann dabei erreicht werden, dass eine Nabe beim Aufstecken des Werkstückes selbst tätig zentriert wird, so dass der Benutzer des Handrührgeräts keine besondere Sorgfalt beim Werkzeugwechsel aufwenden muss. Selbst wenn er das Werkzeug zunächst schräg zur Wellenachse an das Wellenende ansetzt, ist gewährleistet, dass die Nabe beim Aufstecken automatisch in eine genau fluchtende Ausrichtung zu der Wellenachse kommt, ohne dass der Federlappen an der Werkzeugnabe einer unzulässigen Beanspruchung ausgesetzt wäre.

Die Patentanmeldung EP 1 656 867 A1 enthält ein Zubehörteil für einen Stabmixer, der im Inneren eines Gefäßes eingesetzt wird um Nahrungsprodukte zu schneiden oder zu mixen. Das Zubehörteil umfasst eine zentrale Achse mit zumindest einer Klinge oder einem Flügel, die beziehungsweise der an die besagte Achse und an einer oberen Stütze oder einem Haken befestigt ist. Dabei ist die Stütze oder der Haken zum Einpassen oder Verbinden mit der Antriebseinheit eines Stabmixers vorhanden. Das Zubehörteil formt ein herausnehmbares Set aus einer herausnehmbaren Basis, die über dem unteren Teil der zentralen Achse durch Befestigungsmittel angebracht ist. Die Befestigungsmittel gestatten das freie Drehen der zentralen Achse relativ zur Basis. Die Befestigungsmittel bestehen aus einem Gewinde als unteren Fortsatz der besagten zentralen Achse und einer Befestigungskappe mit einer Gussform mit Schraubengewinde zum Einfädeln des genannten Gewindes.

In der Patentanmeldung EP 1 900 315 A1 wird ein Haushaltsmixer vom tauchenden Typ beschrieben, der einen Motor aufweist, der ein Arbeitswerkzeug antreibt, das insbesondere dazu bestimmt ist, Eiweiß zu Schnee zu schlagen. Das Arbeitswerkzeug weist die Form einer archimedischen Schraube auf, die ein Gewinde umfasst, das sich wendelförmig um eine Nabe erstreckt, die über ihr oberes Ende mit einem Mitnehmer gekoppelt ist, der mit dem Motor fest drehverbunden ist.

Die Patentanmeldung EP 2 545 819 A1 beschreibt ein Elektrohaushaltsgerät zum Pürieren mit einem Motorgehäuse, an dem es mit der Hand gehalten werden kann.

In der Gebrauchsmusterschrift DE 20 2007 019 233 U1 ist eine Arbeitseinheit für ein Gerät zum Bearbeiten von Lebensmitteln enthalten, dass mindestens ein auf einer Arbeitsachse angeordnetes und in Umfangsrichtung der Arbeitsachse wirkendes Arbeitsmittel umfasst. Dabei ist oberhalb und/oder unterhalb des Arbeitsmittels mindestens ein Abweiser angeordnet. Der untere Abweiser ist drehmomentschlüssig lösbar oder fix an einem in Richtung der Arbeitsachse gesehenen unteren Ende der Arbeitseinheit befestigbar.

Aus der Patentschrift FR 2 450 092 A1 ist ein Küchengerät zum Behandeln von Lebensmitteln offenbart, welches eine um eine waagrechte Achse drehbare Trommel aufweist, deren Seitenwand perforiert ist und von der ein Ende offen, dagegen das andere Ende durch einen Flansch verschlossen ist. Eine waagrechte drehbare Welle, die einen Mitnehmer trägt, der in eine Aufnahmekammer vorspringt, ist mit dem Flansch abnehmbar kuppelbar. Der Mitnehmer trägt auf seiner Seitenfläche in gleichen Abständen voneinander eine Reihe von schraubenförmigen Rippen, die miteinander ein mehrgängiges Außengewinde bilden, während der Flansch der Trommel mit einer Mittelbohrung ausgebildet ist. Das Kuppeln der Trommel auf dem Mitnehmer geschieht durch einen einfachen Druck, der vom Benutzer auf die Trommel ausgeübt wird, bis die Ausnehmungen in Eingriff mit den Rippen gebracht sind. Anschließend nimmt beim Drehen der Welle die Trommel auf dem Mitnehmer immer mehr ihre Endstellung ein, die sie während der ganzen Zeit der Drehung der Welle automatisch beibehält. Nach dem Stillstand der Welle, braucht der Benutzer zum Abkuppeln der Trommel praktisch nur einen einfachen Zug auf die Trommel nach außen, aus der Aufnahmekammer heraus, auszuüben.

In der europäischen Patentanmeldung EP 1 772 087 A1 sind ein Fuß eines Mixers und ein damit ausgestatteter Stabmixer beschrieben. Der Fuß des Mixers umfasst eine Schutzglocke, die ein abnehmbares Drehwerkzeug umgibt, wobei das Werkzeug dazu bestimmt ist, von einem im Gehäuse untergebrachten Motor angetrieben zu werden. Das Werkzeug ist an einem Greifelement drehbar gelagert, wobei das Greifelement durch die Schutzglocke arretiert wird, wenn das Werkzeug am Fuß des Mixers montiert wird.

Aus der europäischen Patentanmeldung EP 0 221 392 A2 ist ein Zusatzgerät für eine elektrische Küchenmaschine, insbesondere für einen Stabmixer, bekannt, bei der ein drehbar gelagertes Werkzeug zum Zerkleinern und/oder Mischen von Nahrungsmitteln über eine Kupplungsanordnung antreibbar ist. Ein besonders schneller und unkomplizierter Einkuppelvorgang wird dadurch erreicht, dass eine zweite Kupplungshälfte in einen drehfesten Eingriff mit dem Werkzeug der Küchenmaschine bringbar ist. Dabei bildet das Werkzeug der Küchenmaschine die zweite Kupplungshälfte.

Aus der Patentschrift US 6 302 614 B1 ist eine Schnellkupplungsanordnung für eine Teleskopwelle bekannt, die zwischen einem oberem Wellenabschnitt und einem unterem Wellenabschnitt montiert ist und zwischen zwei Positionen zur Verriegelung- Entriegelung des oberen Wellenabschnitts und des unteren Wellenabschnitts rotiert. Die Schnellkupplungsanordnung umfasst eine sich an einem Ende verjüngende Schraube, deren Gewinde mit Innengewinden der Teleskopwelle in Eingriff gebracht werden können.

Schließlich ist in der europäischen Patentanmeldung EP 1 481 622 A1 ein handgetriebenes Lebensmittelverarbeitungsgerät beschrieben, das eine Schale, die das zu verarbeitende Lebensmittel aufnimmt und eine drehbare Antriebswelle hat. Zudem weist das Gerät eine Abdeckung, die abnehmbar an der Schale angebracht ist und einen handgetriebenen Motor zum Antreiben der Antriebswellen auf. Dabei hat der handgetriebene Motor eine Rolle und eine Zugschnur mit mehreren Windungen, die die Rolle umschließen, so dass durch einen Zug an der Zugschnur von dem Benutzer die Rolle und damit die Antriebswelle über lange Dauer mit einer hohen Einweggeschwindigkeit gedreht wird.

### Erfindungsgemäße Aufgabe

Die erfindungsgemäße Aufgabe besteht darin, eine verbesserte Komponente eines Küchengeräts zur Verfügung zu stellen. Zudem besteht die Aufgabe darin, ein verbessertes Werkzeug zum Befestigen an einer Kupplung einer Komponente eines Küchengeräts und ein verbessertes Kit aus einer Komponente eines Küchengeräts und einem Werkzeug sowie ein verbessertes Küchengerät bereitzustellen.

### Erfindungsgemäße Lösung

Die erfindungsgemäße Aufgabe wird gelöst durch eine Komponente eines Küchengeräts mit einer Kupplung zum Befestigen eines Werkzeugs, wobei die Kupplung ein mehrgängiges Gewinde aufweist. Die Kupplung dient der lösbaren Verbindung einer drehbaren Achse der Komponente und dem Werkzeug. Die Kupplung und/oder das Werkzeug weisen dabei ein mehrgängiges Gewinde auf. Ein Gewinde ist mehrgängig, wenn es mehr als einen Gewindegang aufweist.

Vorteilhafterweise ist durch ein mehrgängiges Gewinde erreichbar, dass das Werkzeug mit nur einer kurzen Drehung auf die Kupplung der Komponente aufgeschraubt werden kann. Dadurch ist es möglich, sofern die Achse frei drehbar ist, dass ein Benutzer das Werkzeug durch eine axiale Bewegung mit der Kupplung verbinden kann und durch eine entgegengesetzte Bewegung von der Kupplung ablösen kann. Durch die Bewegung des Werkzeugs axial zur Kupplung kann sich die Achse derart drehen, dass sich eine Schraubverbindung zwischen Werkzeug und Kupplung ergeben kann oder sich bei entgegengesetzter Bewegung eine Schraubverbindung zwischen Werkzeug und Kupplung lösen kann. Eine Verschraubung des Werkzeugs mit der Komponente ist erfindungsgemäß erreichbar, ohne dass der Benutzer das Werkzeug drehen muss. Alternativ kann das Werkzeug erfindungsgemäß auch durch Aufschrauben mit der Kupplung verbunden und durch Abschrauben von dieser getrennt werden. Dies ist vorteilhafterweise auch dann möglich, wenn die Achse nicht frei drehbar ist, sondern zum Beispiel durch einen mit der Achse verbundenen Motor blockiert ist. Beim Betrieb der Komponente ist es möglich, dass sich Bearbeitungsgut zwischen Komponente und Werkzeug festsetzt und das Werkzeug blockiert, so dass die Gefahr bestehen kann, dass Komponente und/oder Werkzeug beschädigt werden. Erfindungsgemäß kann sich durch eine axiale Kraft, die vom festgesetzten Bearbeitungsgut auf das Werkzeug ausgeübt wird, dieses von der Kupplung lösen, so dass eine Beschädigung von Komponente und/oder Werkzeug verhindert werden kann. Die Kupplung weist zumindest ein Rastmittel auf, das zur Verrastung mit dem Werkzeug geeignet ist. Das Rastmittel umfasst vorzugsweise eine Vorwölbung, eine Aussparung und/oder eine Einkerbung. Das Rastmittel kann zum Beispiel eine Rastnase, eine Rastnut und/oder einen umlaufenden Ring umfassen. Vorzugsweise kann das Rastmittel die Position des Werkzeugs auf der Kupplung sichern. Durch eine Rastverbindung kann das Werkzeug besonders sicher mit der Kupplung verbunden werden. Das Küchengerät ist bevorzugt ein Stabmixer. Die Komponente ist eine Komponente eines Stabmixers. Derartige Küchengeräte weisen oft Werkzeuge auf, die häufig ausgewechselt werden müssen. Die erfindungsgemäße Kupplung und das erfindungsgemäße Werkzeug erleichtern das Austauschen von Werkzeugen in solchen Küchengeräten. Dabei hat das Gewinde der Kupplung drei oder mehr Gewindegänge. Auf diese Weise kann das Werkzeug schon durch Drehung um einen kleinen Winkel an der Komponente befestigt werden. Das Gewinde der Kupplung hat eine Steigung, die mindestens die zweifache axiale Länge der Kupplung ist. Durch eine besonders hohe Steigung des Gewindes des Werkzeugs kann das Werkzeug besonders einfach auf der Kupplung befestigt und von dieser entfernt werden.

Zudem wird die Aufgabe erfindungsgemäß durch ein Werkzeug zum Befestigen an einer Kupplung einer Komponente eines Küchengeräts gelöst, wobei das Werkzeug ein mehrgängiges Gewinde aufweist. Die Komponente ist eine Komponente eines Stabmixers. Das erfindungsgemäße Werkzeug weist mindestens ein Rastmittel auf, das zur Verrastung mit der Komponente geeignet ist. Ein Rastmittel des Werkzeugs kann eine Vorwölbung, Aussparung und/oder eine Einkerbung umfassen. Durch das Rastmittel kann das Werkzeug besonders fest mit der Komponente verbunden werden. Das Gewinde des Werkzeugs hat drei oder mehr Gewindegänge, wobei das Gewinde des Werkzeugs eine Steigung hat, die mindestens die zweifache axiale Länge der Kupplung ist.

Die Aufgabe wird zudem durch ein Kit gelöst, das die besagte Komponente eines Küchengeräts und das besagte Werkzeug umfasst. Eine weitere Lösung besteht in einem Küchengerät mit der besagten Komponente.

### Bevorzugte Ausführungsformen der Erfindung

Im Betrieb des Küchengeräts mit der Komponente ist die Rotationsrichtung der Achse vorzugsweise derart, dass das Werkzeug durch die Rotation fest an der Komponente gehalten wird.

Bevorzugt ist das Gewinde an der Kupplung ein Außengewinde. In diesem Falle ist bevorzugt das Gewinde des Werkzeugs ein Innengewinde. Auf diese Weise kann die Kupplung besonders einfach gereinigt werden. In einer weiteren, bevorzugten Ausführungsform ist das Gewinde der Kupplung ein Innengewinde. Dabei ist bevorzugt das Gewinde des Werkzeugs ein Außengewinde. In dieser Ausführung lässt sich das Werkzeug besonders leicht reinigen.

In einer erfindungsgemässen Ausführungsform ist das Gewinde der Kupplung dreigängig. Dies bedeutet, dass das Gewinde drei Gewindegänge aufweist. Alternativ kann das Gewinde auf vier-, fünf-, sechs-, sieben- oder achtgängig sein. In einer weiteren Ausführungsform hat das Gewinde mehr als acht Gewindegänge. Auf diese Weise kann das Werkzeug schon durch Drehung um einen kleinen Winkel an der Komponente befestigt werden.

Bevorzugt hat das Gewinde der Kupplung eine Steigung von mindestens 2 mm. Die Steigung des Gewindes ist der Weg der pro Umdrehung des Gewindes zurückgelegt wird. Bevorzugt ist die Steigung des Gewindes der Kupplung mindestens 5 mm, besonders bevorzugt mindestens 10 mm, besonders bevorzugt mindestens 15 mm, besonders bevorzugt mindestens 20 mm, besonders bevorzugt mindestens 25 mm und ganz besonders bevorzugt mindestens 30 mm. Erfindungsgemäss ist die Steigung mindestens die zweifache axiale Länge der Kupplung, bevorzugt die drei-, vier- oder fünffache axiale Länge der Kupplung. Durch eine besonders hohe Steigung des Gewindes der Kupplung kann das Werkzeug besonders einfach auf der Kupplung befestigt und von dieser entfernt werden.

Bevorzugt ist die Komponente eine Pürierkomponente. Die Komponente ist - bevorzugt mit aufgesetztem Werkzeug - dazu geeignet, ein Bearbeitungsgut, wie zum Beispiel gekochtes Gemüse, zu pürieren. Dazu ist das Werkzeug vorzugsweise als Drehscheibe, Schraube und/oder Messer ausgeführt. Vorzugsweise wird die Komponente in einem Pürierstab verwendet. Dabei dreht sich das Werkzeug vorzugsweise derart, dass Bearbeitungsgut von dem Werkzeug durch eine gelochte Oberfläche gedrückt wird, wobei das Bearbeitungsgut püriert werden kann.

Vorzugsweise ist die Komponente abnehmbar vom Küchengerät. Vorzugsweise kann die Komponente zerstörungsfrei vom Küchengerät abgelöst und wieder mit diesem verbunden werden. So kann ein Küchengerät mit mehreren unterschiedlichen Komponenten betrieben werden. In einer bevorzugten Ausführungsform ist die Komponente fest mit dem Küchengerät verbunden, so dass die Komponente nicht zerstörungsfrei von dem Küchengerät entfernt werden kann. Das Küchengerät kann so besonders stabil ausgestaltet sein.

Bevorzugt ist das Gewinde des Werkzeugs ein Innengewinde. Dabei kann das Gewinde des Werkzeugs vorteilhafterweise auf ein Außengewinde der Komponente aufgeschraubt werden. Alternativ ist das Gewinde des Werkzeugs ein Außengewinde. Ein Außengewinde eines Werkzeugs ist besonders einfach zu reinigen.

In einer erfindungsgemässen Ausführungsform ist das Gewinde des Werkzeugs dreigängig. Dies bedeutet, dass das Gewinde des Werkzeugs drei Gewindegänge aufweist. Alternativ kann das Gewinde auch vier-, fünf-, sechs-, sieben- oder achtgängig sein. In einer weiteren Ausführungsform hat das Gewinde des Werkzeugs mehr als acht Gewindegänge. Vorzugsweise hat das Gewinde des Werkzeugs die gleiche Anzahl an Gewindegängen wie das Gewinde der Kupplung.

Bevorzugt hat das Gewinde des Werkzeugs eine Steigung von mindestens 2 mm. Die Steigung des Werkzeugs ist der Weg, der pro Umdrehung des Gewindes zurückgelegt wird. Bevorzugt ist die Steigung des Werkzeugs mindestens 5 mm, besonders bevorzugt mindestens 10 mm, besonders bevorzugt mindestens 15 mm, besonders bevorzugt mindestens 20 mm, besonders bevorzugt mindestens 25 mm und ganz besonders bevorzugt mindestens 30 mm. Bevorzugt ist die Steigung des Gewindes des Werkzeugs mindestens die drei-, vier- oder fünffache axiale Länge der Kupplung. Durch eine besonders hohe Steigung des Gewindes des Werkzeugs kann das Werkzeug besonders einfach auf der Kupplung befestigt und von dieser entfernt werden.

Eine Ausführungsform der Erfindung besteht in einem Kit, das eine erfindungsgemäße Komponente eines Küchengeräts und ein erfindungsgemäßes Werkzeug enthält. Durch den Erwerb eines solchen Kits kann ein Anwender aufeinander abgestimmte Komponenten und Werkzeuge erhalten, so dass Fehlbedienungen - zum Beispiel durch das Aufschrauben nicht geeigneter Werkzeuge - vermieden werden können.

Zudem umfasst die Erfindung ein Küchengerät mit der erfindungsgemäßen Komponente. Bei einem solchen Küchengerät lässt sich das Werkzeug vorzugsweise besonders einfach aufsetzen und entfernen. Dabei kann die Komponente fest mit dem Küchengerät verbunden sein, so dass sie nicht zerstörungsfrei und/oder ohne Werkzeuge entfernt werden kann. Alternativ ist es auch möglich, dass die Komponente mit dem Küchengerät zerstörungsfrei lösbar und wiederverbindbar ist.

### Kurzbeschreibung der Figuren

- Figur 1: zeigt ein erfindungsgemäßes Küchengerät als Stabmixer;
- Figur 2: zeigt eine Komponente eines Küchengeräts als Pürierkomponente mit aufgesetztem Werkzeug;
- Figur 3: zeigt die Pürierkomponente ohne Werkzeug;
- Figur 4: zeigt das Werkzeug für die Pürierkomponente;
- Figur 5: zeigt die Pürierkomponente mit aufgesetztem Werkzeug in einem Längsschnitt;
- Figur 6: zeigt das Werkzeug und die Kupplung; und
- Figur 7: zeigt ein Schnitt durch die Kupplung bei aufgesetztem Werkzeug.

### Ausführliche Beschreibung anhand von Ausführungsbeispielen

Bei der nachfolgenden Beschreibung von bevorzugten Ausführungsbeispielen der vorliegenden Erfindung bezeichnen gleiche Bezugszeichen gleiche oder vergleichbare Komponenten. Der Übersichtlichkeit halber sind nicht in allen Figuren alle Bezugszeichen dargestellt.

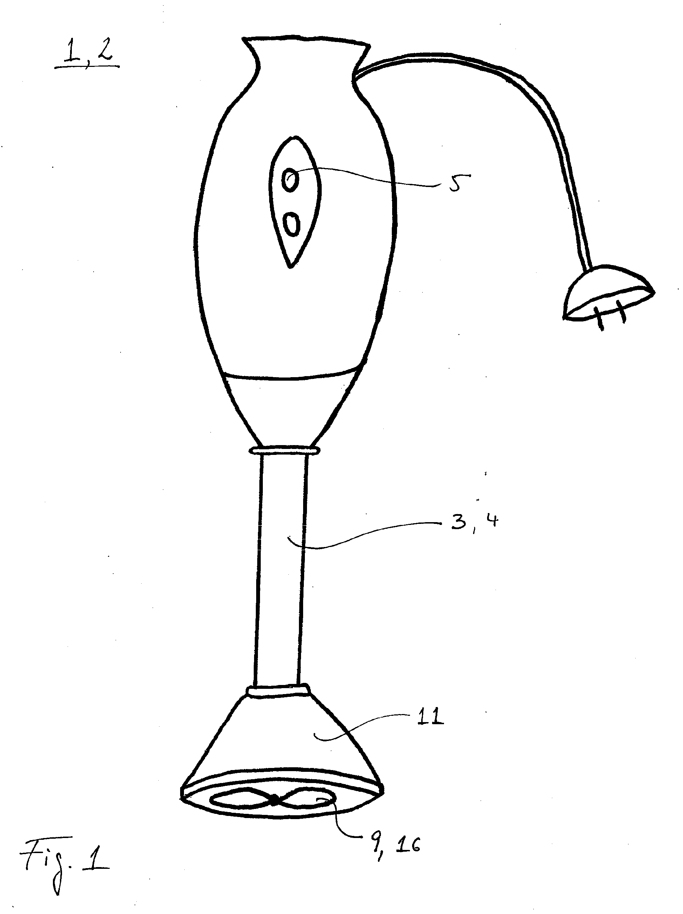

Die Figuren 1 zeigt das erfindungsgemäße Küchengerät 1 ausgeführt als Stabmixer 2. An dem Küchengerät 1 ist als Komponente 3 eine Pürierkomponente 4 aufgesetzt. Ferner weist das Küchengerät 1 einen Schalter 5 auf, mit dem ein elektrischer Motor 6 (nicht dargestellt) im Stabmixer 2 an- und ausgeschaltet werden kann. Die in Figuren 1 bis 3 und 5 dargestellte Komponente 3 weist eine Achse 7 mit einer Kupplung 8 auf, die zur Befestigung eines Werkzeugs 9 dient. Dabei weist die Kupplung 8 ein mehrgängiges Gewinde 10 auf.

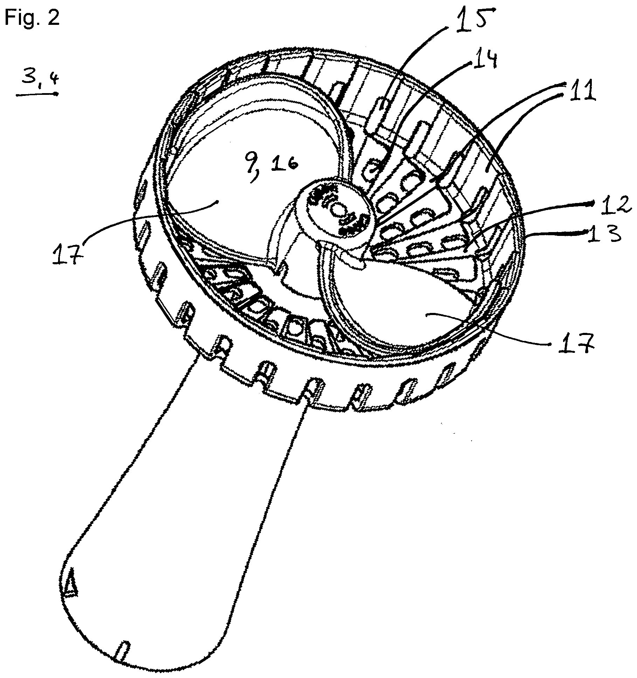

Figur 2 zeigt die erfindungsgemäße Komponente 3 mit aufgesetztem Werkzeug 9. Dabei ist zu sehen, dass die Komponente 3 ein das Werkzeug 9 teilweise umgebendes Siebteil 11 aufweist. Das Siebteil 11 ist topfförmig ausgebildet und weist einen Topfboden 12 sowie einen Topfmantel 13 auf, der den Topfboden 12 kragenartig umschließt. Der Topfboden 12 weist Durchtrittsöffnungen 14 auf. Zudem befinden sich in dem Topfmantel 13 Aussparungen 15. Das Werkzeug 9 ist auf einer in Figur 2 nicht dargestellten Kupplung 8 der Pürierkomponente 4 aufgesteckt. Das Werkzeug 9 ist in diesem Ausführungsbeispiel als Pürierwerkzeug 16 ausgebildet. Das Pürierwerkzeug 16 nimmt im Wesentlichen die Form eines Propellers mit zwei Flügeln 17 ein. In dieser Ausführungsform und in der in Figur 2 gezeigten Ansicht von unten rotiert das Werkzeug 9 der Komponente 3 im Uhrzeigersinn. Dabei wird Bearbeitungsgut von dem Werkzeug 9 an den Topfboden 12 und den Topfmantel 13 gepresst, sodass das Bearbeitungsgut zerkleinert wird und durch die Aussparungen 15 im Topfmantel 13 sowie durch die Durchtrittsöffnungen 14 im Topfboden austritt.

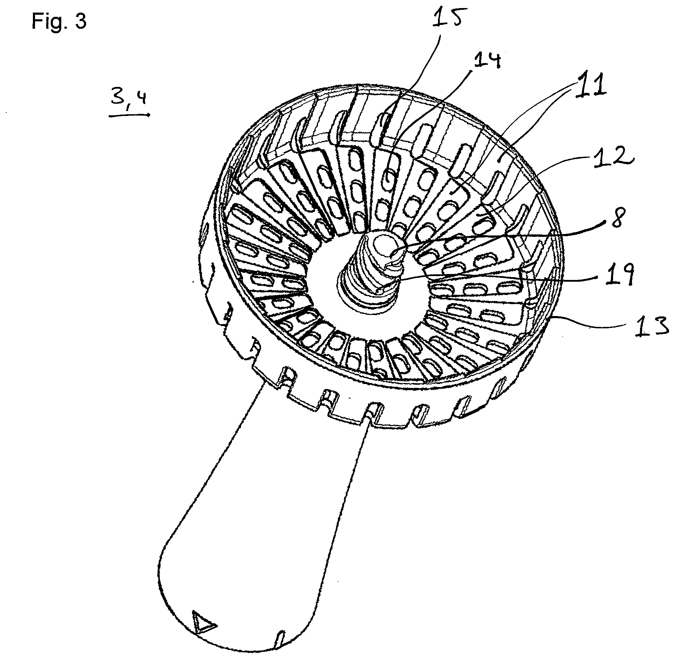

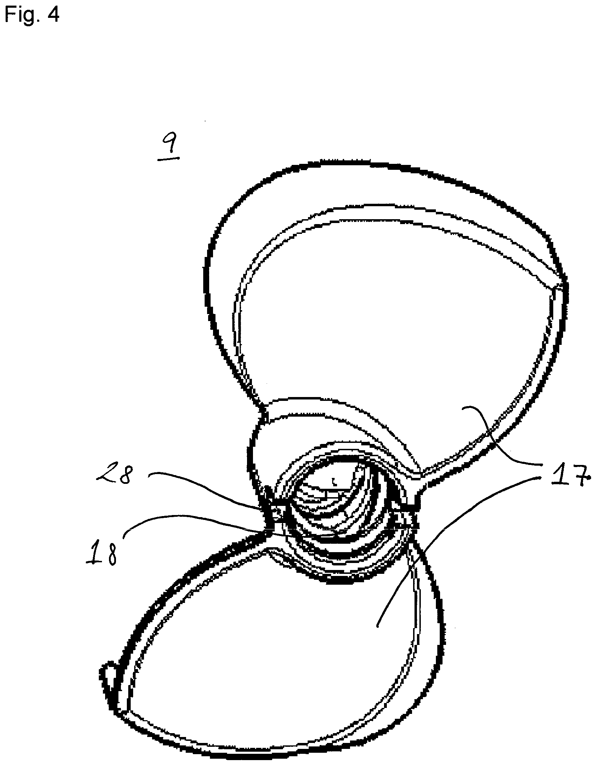

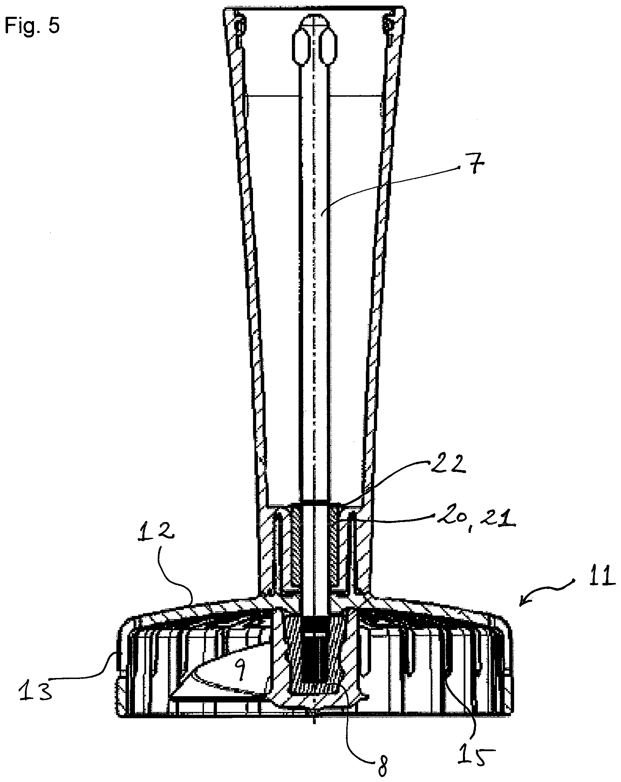

Figur 3 zeigt die erfindungsgemäße Pürierkomponente ohne das Werkzeug. In dieser Ansicht ist die Kupplung 8 mit ihrem mehrgängigen Gewinde 10 besonders deutlich zu erkennen. Die elongierten, ovalen Durchtrittsöffnungen 14 im Topfboden 12 sind hier radial zur Kupplung 8 ausgerichtet. Die Aussparungen 15 im Topfmantel 13 sind ebenfalls elongiert und parallel zu der hier nicht dargestellten Achse 7 der Pürierkomponente 4 ausgerichtet. Figur 4 zeigt das propellerartige Pürierwerkzeug 16 mit einem Innengewinde 18, das auf das Außengewinde der in Figur 3 dargestellten Kupplung 8 aufgesteckt werden kann. Figur 5 zeigt den Längsschnitt durch die Achse 7 der Pürierkomponente 4 mit aufgesetztem Pürierwerkzeug 16. Dabei sind die parallel zur Achse 7 ausgerichteten Aussparungen 15 im Topfmantel 13 deutlich zu erkennen. Zudem ist in Figur 5 ein Drehlager 20 zum Lagern der Achse 7 in der Komponente 3 gezeigt. Dabei ist das Drehlager 20 als Gleitlager 21 ausgeführt ist. Auf der Achse 7 ist oberhalb des Gleitlagers 21 eine Dichtungsscheibe 22 angebracht, die ein Verrutschen der Achse 7 verhindert.

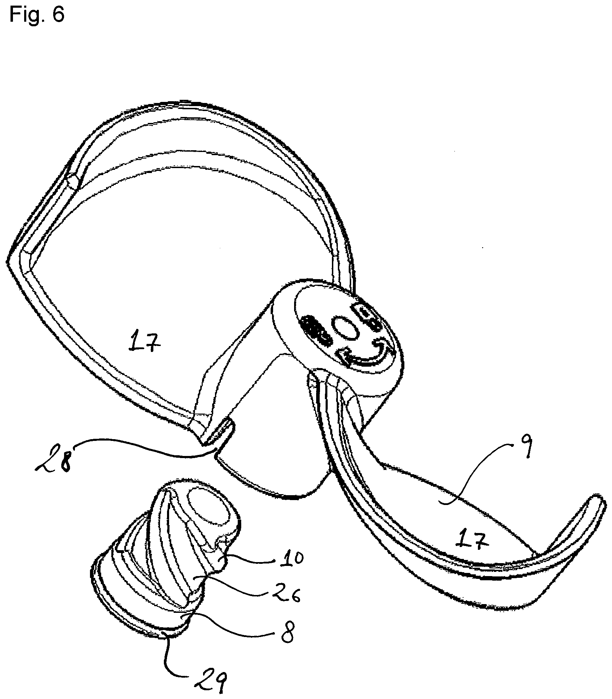

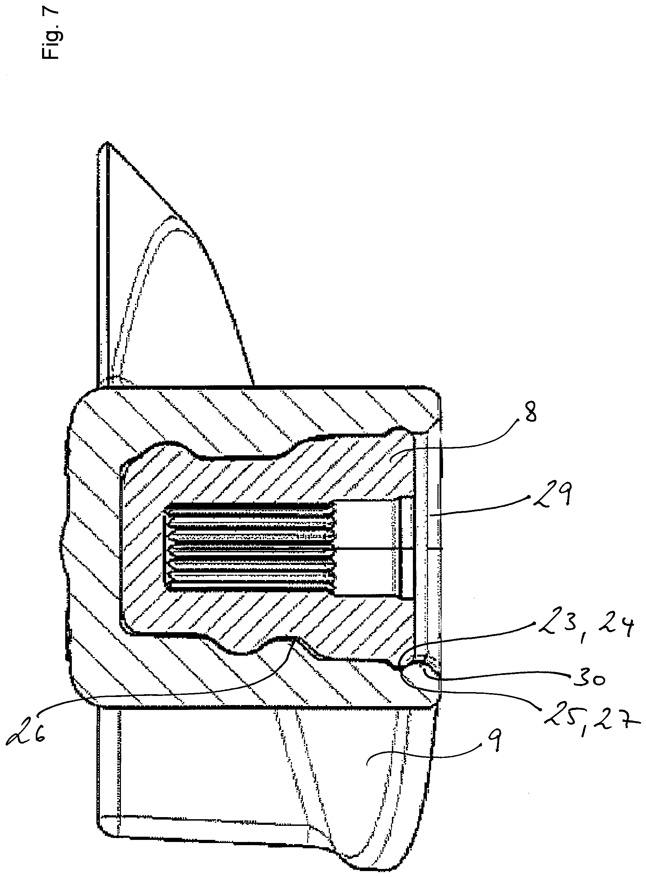

Figuren 6 und 7 zeigen die Kupplung 8 mit ihrem mehrgängigen Außengewinde 19 und einem Rastmittel 23, das als ein ringförmiger Rastvorsprung 24 ausgebildet ist, der mit einem Rastmittel 25 des Werkzeug 9 verrasten kann. Figur 7 zeigt einen Schnitt durch das Werkzeug 9, das mit der Kupplung 8 verrastet ist. Dabei ist das mehrgängige Gewinde 10 der Kupplung 8 mit seinen Gewindegängen 26 deutlich zu erkennen. Zudem ist gezeigt, dass der ringförmige Rastvorsprung 24 der Kupplung 8 mit dem Rastmittel 25 des Werkzeugs 9 verrastet ist. Das Rastmittel 25 des Werkzeugs 9 ist in dieser Ausführungsform als eine Rastnut 27 des Werkzeugs 9 ausgeführt. Das Verrasten des Werkzeugs 9 mit der Kupplung 8 ist durch Einschnitte 28 des Werkzeugs 9 erleichtert. Die Einschnitte 28 sind in dieser Ausführungsform eines Werkzeugs 9 für einen Stabmixer 2 ausgehend von der Oberfläche des Werkzeugs 9 gefertigt, die beim Betrieb des Stabmixers 2 dem Motor 6 des Stabmixers 2 am nächsten liegt. Durch die Einschnitte 28 wird eine Flexibilität im Bereich der Einschrauböffnung des Werkzeugs 9 geschaffen, sodass das Rastmittel 23 der Kupplung 8 besonders leicht mit dem Rastmittel 25 des Werkzeugs 9 verrasten kann. Das Rastmittel 25 des Werkzeugs 9 ist hier zudem derart gestaltet, dass die Orientierung des Werkzeugs 9 gegenüber der Kupplung 8 eindeutig festgelegt ist. Dazu können an der Kupplung 8 Vorsprünge vorgesehen sein, die mit den Einschnitten 28 des Werkzeugs 9 kooperieren können. Die Kupplung 8 weist darüber hinaus einen Ring 29 auf, der den Überhang 30 des Werkzeugs 9 stützen kann, wenn das Werkzeug 9 auf die Kupplung aufgesetzt ist. Der Überhang 30 ist dabei der Teil des Werkzeugs 9, der sich im aufgesetzten Zustand des Werkzeugs 9 auf die Kupplung 8 zwischen Ring 29 der Kupplung 8 und Rastvorsprung 24 der Kupplung 8 befindet.

Das Werkzeug 9 kann durch Drehen auf die Kupplung 8 aufgeschraubt werden. Wenn die Komponente 3 nicht mit dem Küchengerät 1 verbunden ist und die Achse 7 frei drehbar ist, so kann das Werkzeug 9 auch durch ein einfaches axiales Drücken auf die Kupplung 8 aufgeschoben werden. Da das mehrgängige Gewinde 10 der Kupplung 8 in der Ausführungsform in Figur 6 besonders steil ist, kann sich durch das Aufschieben des Werkzeugs 9 auf die Kupplung 8 die Achse 7 derart drehen, dass das Werkzeug 9 auf die Kupplung 8 aufgeschraubt wird. Zur Befestigung der Kupplung 8 an dem Werkzeug 9 befindet sich ein Rastvorsprung 24 an der Kupplung 8 und eine Rastnut 27 am Werkzeug 9, die durch das Aufschieben miteinander verrasten. Wenn die Komponente 3 mit dem Küchengerät 1 verbunden ist, so kann das Werkzeug 9 durch Rotation von der Kupplung 8 abgeschraubt werden. Falls die Achse 7 frei drehbar ist, so kann das Werkzeug 9 auch einfach von der Kupplung 8 abgezogen werden, wobei sich die Kupplung 8 während des Abziehens derart dreht, dass das Werkzeug 9 von der Kupplung 8 abgeschraubt wird. Falls sich bei der Verwendung des Küchengeräts 1 Bearbeitungsgut zwischen Werkzeug 9 und Kupplung 8 verfängt, so kann sich das Werkzeug 9 durch die hohe Steigung des mehrgängigen Gewindes 10 der Kupplung 8 von der Kupplung 8 abschrauben, so dass eine Beschädigung des Küchengeräts 1 vermieden wird. Zudem ist durch das mehrgängige Gewinde 10 das Drehmoment, bei dem ein Materialbruch entsteht wesentlich höher als bei aus dem Stand der Technik bekannten Lösungen. Die Endposition des Werkzeugs 9 auf der Kupplung 8 ist für den Benutzer durch das Verrasten der Rastmittel 23, 25 der Kupplung 8 und des Werkzeugs 9 spürbar.

### Bezugszeichenliste

- 1: Küchengerät
- 2: Stabmixer
- 3: Komponente eines Küchengeräts
- 4: Pürierkomponente
- 5: Schalter
- 6: Motor
- 7: Achse
- 8: Kupplung
- 9: Werkzeug
- 10: Gewinde
- 11: Siebteil
- 12: Topfboden
- 13: Topfmantel
- 14: Durchtrittsöffnungen im Topfboden
- 15: Aussparungen im Topfmantel
- 16: Pürierwerkzeug
- 17: Flügel
- 18: Innengewinde
- 19: Außengewinde
- 20: Drehlager
- 21: Gleitlager
- 22: Dichtungsscheibe
- 23: Rastmittel der Kupplung
- 24: Rastvorsprung der Kupplung
- 25: Rastmittel des Werkzeugs
- 26: Gewindegang
- 27: Rastnut des Werkzeugs
- 28: Einschnitt des Werkzeugs
- 29: Ring der Kupplung
- 30: Überhang des Werkzeugs

## Patentansprüche

1. Komponente (3) eines Küchengeräts (1) mit einer Kupplung (8) zur Befestigung eines Werkzeugs (9), wobei die Kupplung (8) ein Gewinde (10) aufweist das mehrgängig ist, wobei die Komponente (3) eine Komponente (3) eines Stabmixers (2) ist und die Kupplung (8) zumindest ein Rastmittel (23) aufweist, das zur Verrastung mit dem Werkzeug (9) geeignet ist,
**dadurch gekennzeichnet, dass**
das Gewinde (10) der Kupplung (8) drei oder mehr Gewindegänge hat,
wobei das Gewinde (10) der Kupplung (8) eine Steigung hat, die mindestens die zweifache axiale Länge der Kupplung (8) ist.

2. Komponente (3) nach Anspruch 1, **dadurch gekennzeichnet, dass** das Gewinde (10) der Komponente (3) ein Innengewinde (18) ist.

3. Komponente (3) nach Anspruch 1, **dadurch gekennzeichnet, dass** das Gewinde (10) der Komponente (3) ein Außengewinde (19) ist.

4. Komponente (3) nach einem der vorherigen Ansprüche, **dadurch gekennzeichnet, dass** das Gewinde (10) der Komponente (3) dreigängig ist.

5. Komponente (3) nach einem der vorherigen Ansprüche, **dadurch gekennzeichnet, dass** die Steigung des Gewindes (10) der Komponente (3) mindestens 2 mm beträgt.

6. Komponente (3) nach einem der vorherigen Ansprüche, **dadurch gekennzeichnet, dass** die Komponente (3) eine Pürierkomponente (4) ist.

7. Komponente (3) nach einem der vorherigen Ansprüche, **dadurch gekennzeichnet, dass** die Komponente (3) von dem Küchengerät (1) abnehmbar ist.

8. Werkzeug (9) zum Befestigen an einer Kupplung (8) einer Komponente (3) eines Küchengeräts (1), wobei das Werkzeug (9) ein Gewinde (10) aufweist, das mehrgängig ist, wobei die Komponente (3) die Komponente (3) eines Stabmixers (2) ist und das Werkzeug (9) mindestens ein Rastmittel (25) aufweist, das zur Verrastung mit der Komponente (3) geeignet ist,
**dadurch gekennzeichnet, dass**
das Gewinde (10) des Werkzeugs (9) drei oder mehr Gewindegänge hat,
wobei das Gewinde (10) des Werkzeugs (9) eine Steigung hat, die mindestens die zweifache axiale Länge der Kupplung (8) ist.

9. Werkzeug (9) nach Anspruch 8, **dadurch gekennzeichnet, dass** das Gewinde (10) des Werkzeugs (9) ein Innengewinde (18) ist.

10. Werkzeug (9) nach Anspruch 8, **dadurch gekennzeichnet, dass** das Gewinde (10) des Werkzeugs (9) ein Außengewinde (19) ist.

11. Werkzeug (9) nach einem der Ansprüche 8 bis 10, **dadurch gekennzeichnet, dass** das Gewinde (10) des Werkzeugs (9) dreigängig ist.

12. Werkzeug (9) nach einem der Ansprüche 8 bis 11, **dadurch gekennzeichnet, dass** das Gewinde (10) des Werkzeugs (9) eine Steigung von mindestens 2 mm hat.

13. Kit umfassend eine Komponente (3) eines Küchengeräts (1) nach einem der Ansprüche 1 bis 7 und ein Werkzeug (9) nach einem der Ansprüche 8 bis 12.

14. Küchengerät (1) mit einer Komponente (3) nach einem der Ansprüche 1 bis 7.

## Claims

1. Component (3) for a kitchen appliance (1), which component (3) comprises a coupling (8) for fastening a tool (9), wherein the coupling (8) has a multistart thread (10), wherein the component (3) is a component (3) of a mixing wand (2) and the coupling (8) has at least one locking means (23) which is suitable for interlocking with the tool (9),
**characterised in that**
the thread (10) of the coupling (8) has three or more thread paths,
wherein the thread (10) of the coupling (8) has a pitch which is at least twice the axial length of the coupling (8).

2. Component (3) according to claim 1, **characterised in that** the thread (10) of the component (3) is a female thread (18).

3. Component (3) according to claim 1, **characterised in that** the thread (10) of the component (3) is a male thread (19).

4. Component (3) according to one of the preceding claims, **characterised in that** the thread (10) of the component (3) is a three-start thread.

5. Component (3) according to one of the preceding claims, **characterised in that** the pitch of the thread (10) of the component (3) is at least 2 mm.

6. Component (3) according to one of the preceding claims, **characterised in that** the component (3) is a puréeing component (4).

7. Component (3) according to one of the preceding claims, **characterised in that** the component (3) can be removed from the kitchen appliance (1).

8. Tool (9) for fastening to a coupling (8) of a component (3) for a kitchen appliance (1), wherein the tool (9) has a multistart thread (10), wherein the component (3) is the component (3) of a mixing wand (2) and the tool (9) has at least one locking means (25) which is suitable for interlocking with the component (3),
**characterised in that**
the thread (10) of the tool (9) has three or more thread paths,
wherein the thread (10) of the tool (9) has a pitch which is at least twice the axial length of the coupling (8).

9. Tool (9) according to claim 8, **characterised in that** the thread (10) of the tool (9) is a female thread (18).

10. Tool (9) according to claim 8, **characterised in that** the thread (10) of the tool (9) is a male thread (19).

11. Tool (9) according to one of claims 8 to 10, **characterised in that** the thread (10) of the tool (9) is a three-start thread.

12. Tool (9) according to one of claims 8 to 11, **characterised in that** the thread (10) of the tool (9) has a pitch of at least 2 mm.

13. Kit comprising a component (3) for a kitchen appliance (1) according to one of claims 1 to 7 and a tool (9) according to one of claims 8 to 12.

14. Kitchen appliance (1) having a component (3) according to one of claims 1 to 7.

## Revendications

1. Composant (3) d'un appareil de cuisine (1) avec un accouplement (8) pour la fixation d'un outil (9), dans lequel l'accouplement (8) présente un filetage (10) à pas multiple, dans lequel le composant (3) est un composant (3) d'un mixeur plongeant (2) et l'accouplement (8) présente au moins un moyen d'encliquètement (23) approprié pour l'encliquètement avec l'outil (9), **caractérisé en ce que** le filetage (10) de l'accouplement (8) possède trois taraudages ou plus, dans lequel le filetage (10) de l'accouplement (8) possède une inclinaison correspondant au moins au double de la longueur axiale de l'accouplement (8).

2. Composant (3) selon la revendication 1, **caractérisé en ce que** le filetage (10) du composant (3) est un filetage interne (18).

3. Composant (3) selon la revendication 1, **caractérisé en ce que** le filetage (10) du composant (3) est un filetage externe (19).

4. Composant (3) selon l'une des revendications précédentes, **caractérisé en ce que** le filetage (10) du composant (3) est à pas triple.

5. Composant (3) selon l'une des revendications précédentes, **caractérisé en ce que** l'inclinaison du filetage (10) du composant (3) est d'au moins 2 mm.

6. Composant (3) selon l'une des revendications précédentes, **caractérisé en ce que** le composant (3) est un composant de réduction en purée (4).

7. Composant (3) selon l'une des revendications précédentes, **caractérisé en ce que** le composant (3) est amovible de l'appareil de cuisine (1).

8. Outil (9) pour la fixation à un accouplement (8) d'un composant (3) d'un appareil de cuisine (1), dans lequel l'outil (9) présente un filetage (10) à pas multiple, dans lequel le composant (3) est le composant (3) d'un mixeur plongeant (2) et l'outil (9) présente au moins un moyen d'encliquètement (23) approprié pour l'encliquètement avec le composant (3), **caractérisé en ce que** le filetage (10) de l'outil (9) possède trois taraudages ou plus, dans lequel le filetage (10) de l'outil (9) possède une inclinaison correspondant au moins au double de la longueur axiale de l'accouplement (8).

9. Outil (9) selon la revendication 8, **caractérisé en ce que** le filetage (10) de l'outil (9) est un filetage interne (18).

10. Outil (9) selon la revendication 8, **caractérisé en ce que** le filetage (10) de l'outil (9) est un filetage externe (19).

11. Outil (9) selon l'une des revendications 8 à 10, **caractérisé en ce que** le filetage (10) de l'outil (9) est à pas triple.

12. Outil (9) selon l'une des revendications 8 à 11, **caractérisé en ce que** le filetage (10) de l'outil (9) possède une inclinaison d'au moins 2 mm.

13. Kit comprenant un composant (3) d'un appareil de cuisine (1) selon l'une des revendications 1 à 7 et un outil (9) selon l'une des revendications 8 à 12.

14. Appareil de cuisine (1) avec un composant (3) selon l'une des revendications 1 à 7.
